# EUROPEAN PATENT APPLICATION

(11) **EP 4 823 079 A1**
(43) Date of publication of application: **14.10.2026**
(21) Application number: 24907468.3
(22) Date of filing: 18.12.2024
(51) Int. Cl.: H04M 1/72412, G08B 21/18, H04M 1/11

(54) **INFORMATION PROCESSING SYSTEM, INFORMATION PROCESSING METHOD, AND PROGRAM**

(30) Priority: 20.12.2023 JP 2023214888
(71) Applicant: Newsedtech Co., Ltd., Tokyo 104-0031 (JP)
(72) Inventor: AWAZU, Hamakazu, Tokyo 101-0051 (JP)
(74) Representative: Appleyard Lees IP LLP
(86) International application number: PCT/JP2024/044864
(87) International publication number: WO 2025/135084

(57) **Abstract**

The objective of the present invention is to realize a simple method for detecting the state of a mobile terminal. An acceleration sensor 2 or the like that operates by means of vibration power generation is disposed on a member that can be attached to a user terminal 1 carried by a user. When such a member is attached to the user terminal 1, a state detecting unit 51 of the user terminal 1 receives detection results of the acceleration sensor 2 or the like using a prescribed wireless method, in a state in which the member is attached, and detects the state of the user terminal 1, such as falling, on the basis of the detection results. A state management unit 52 manages various states of the user terminal 1, including a state of the user terminal 1 such as falling, detected by the state detecting unit 51, by storing the various states in a terminal state database 61. A state presenting unit 53 presents the various states of the user terminal 1, including a state of the user terminal 1 such as falling, detected by the state detecting unit 51, to the user by outputting the states from an output unit 17.

## Description

### TECHNICAL FIELD

The present invention relates to an information processing system, an information processing method, and a program.

### BACKGROUND ART

Conventionally, a simple technique has been demanded for state detection such as fall detection of a mobile terminal (see, for example, Patent Document 1).

### Citation List

### Patent Documents

Patent Document 1: Japanese Unexamined Patent Application Publication No. 2019-201464

### DISCLOSURE OF THE INVENTION

### Problems to be Solved by the Invention

However, conventional techniques including that of Patent Document 1 have not been able to realize a simple technique for state detection such as fall detection of a mobile terminal.

The present invention has been made in view of such circumstances, and an object of the present invention is to realize a simple technique for state detection such as fall detection of a mobile terminal.

### Means for Solving the Problems

In order to achieve the above object, an information processing system according to one aspect of the present invention includes:
a mobile terminal carried by a user; and
a sensor configured to detect a predetermined physical quantity, the sensor being disposed in a member mountable on the mobile terminal,
the information processing system further including:
   a fall detection unit configured to receive a detection result of the sensor by a predetermined wireless scheme in a state in which the member is mounted, and to detect a fall of the mobile terminal based on the detection result;
   a state management unit configured to manage a state of the mobile terminal, including the detection result of the fall detection unit; and
   a state presentation unit configured to present a state of the mobile terminal, including the detection result of the fall detection unit, to the user.

An information processing method and a program according to one aspect of the present invention correspond respectively to a method and a program corresponding to the information processing system according to one aspect of the present invention.

### Effects of the Invention

According to the present invention, it becomes possible to realize a simple technique for fall detection of a mobile terminal.

### BRIEF DESCRIPTION OF THE DRAWINGS

FIG. 1 is a diagram illustrating an example of an external configuration according to an embodiment of the information processing system of the present invention;
FIG. 2 is a block diagram illustrating an example of a hardware configuration of a user terminal in the information processing system of FIG. 1;
FIG. 3 is a functional block diagram illustrating an example of a functional configuration of the user terminal of FIG. 2 that constitutes the information processing system of FIG. 1; and
FIG. 4 is a diagram illustrating a second embodiment of a functional configuration of the information processing system of the present invention.

### PREFERRED MODE FOR CARRYING OUT THE INVENTION

Embodiments of the present invention will be described below with reference to the drawings.

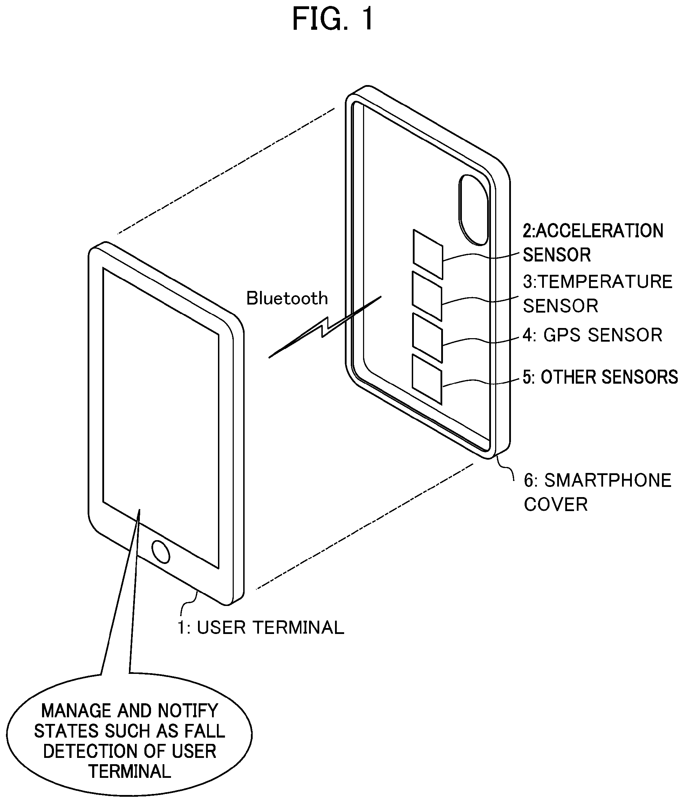

FIG. 1 is a diagram illustrating an example of an external configuration according to an embodiment of the information processing system of the present invention.

In an embodiment of the information processing system of the present invention, an acceleration sensor 2, a temperature sensor 3, a GPS sensor 4, and other sensors 5, each operating by vibration power generation, are embedded in a smartphone cover 6 as in the example of FIG. 1, or alternatively are embedded in a sticker, although not illustrated in FIG. 1. If a user terminal 2 falls while the smartphone cover 6 or the sticker is mounted on a user terminal 1, the acceleration sensor 2 detects the fall of the user terminal 1, executes wireless communication with the user terminal 2 via Bluetooth (registered trademark) or the like, and notifies the user terminal 2 of the fall detection. If an abnormal temperature condition of the user terminal 2 (such as so-called smartphone heatstroke or smartphone hypothermia) occurs while the smartphone cover 6 or the sticker is mounted on the user terminal 1, the temperature sensor 3 detects the abnormal temperature condition of the user terminal 1, executes wireless communication with the user terminal 2 via Bluetooth (registered trademark) or the like, and notifies the user terminal 2 of the abnormal temperature condition. If a lost state of the user terminal 2 occurs while the smartphone cover 6 or the sticker is mounted on the user terminal 1, the GPS sensor 4 detects the lost state, based on the current position of the user terminal 1, executes wireless communication with the user terminal 2 via Bluetooth (registered trademark) or the like, and notifies the user terminal 2 of the lost state. If the user terminal 2 enters a predetermined state while the smartphone cover 6 or the sticker is mounted on the user terminal 1, the other sensors 5 detect the predetermined state, execute wireless communication with the user terminal 2 via Bluetooth (registered trademark) or the like, and notify the user terminal 2 of the predetermined state. The user terminal 1 manages various notified states such as fall detection and provides notifications (alerts) to the user.

In the present embodiment, the management of various notified states such as fall detection and the provision of notifications (alerts) to the user are provided as functions of dedicated application software (hereinafter referred to as "dedicated app") installed on the user terminal 1 that enables use of the present service. However, the functions may also be made available by accessing a dedicated website (hereinafter referred to as "dedicated site") displayed by the browser function of the user terminal 1.

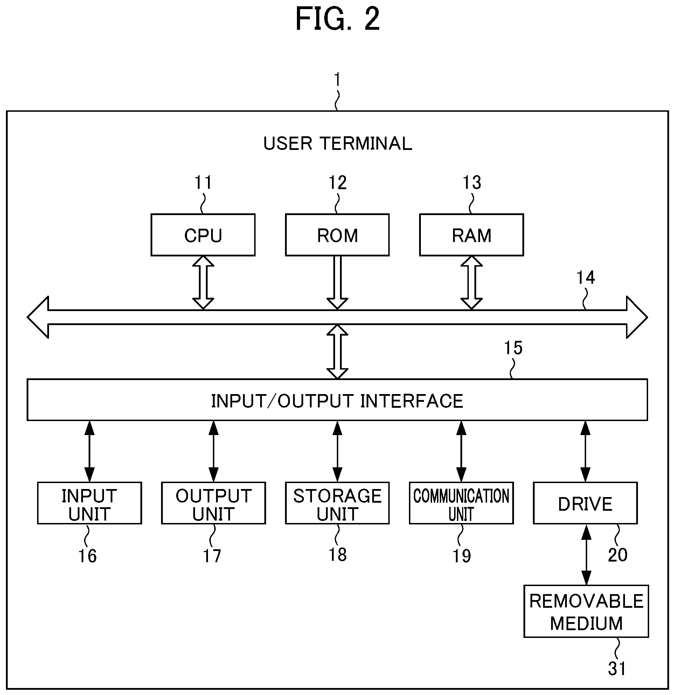

FIG. 2 is a block diagram illustrating an example of a hardware configuration of the user terminal in the information processing system illustrated in FIG. 1.

The user terminal 1 includes a CPU (Central Processing Unit) 11, ROM (Read Only Memory) 12, RAM (Random Access Memory) 13, a bus 14, an input/output interface 15, an input unit 16, an output unit 17, a storage unit 18, a communication unit 19, and a drive 20.

The CPU 11 executes various processing in accordance with a program recorded in the ROM 12 or a program loaded from the storage unit 18 into the RAM 13. The RAM 13 also stores, as appropriate, data and the like necessary for the CPU 11 to execute various processing.

The CPU 11, the ROM 12, and the RAM 13 are mutually connected via the bus 14. The input/output interface 15 is also connected to the bus 14. The input unit 16, the output unit 17, the storage unit 18, the communication unit 19, and the drive 20 are connected to the input/output interface 15.

The input unit 16 is constituted by, for example, a keyboard or the like, and inputs various information. The output unit 17 is constituted by a display such as a liquid crystal display, a speaker, or the like, and outputs various information as images or audio. The storage unit 18 is constituted by DRAM (Dynamic Random Access Memory) or the like, and stores various data. The communication unit 19 executes wireless communication with the acceleration sensor 2, the temperature sensor 3, the GPS sensor 4, the other sensors 5, and the like via Bluetooth (registered trademark) or the like, and also communicates with other apparatuses (not illustrated) via the Internet or the like.

A removable medium 31 including a magnetic disk, an optical disk, a magneto-optical disk, a semiconductor memory, or the like is loaded into the drive 20 as appropriate. A program read from the removable medium 31 by the drive 20 is installed into the storage unit 18 as necessary. The removable medium 31 is also capable of storing various data stored in the storage unit 18, in the same manner as the storage unit 18.

Through cooperation of various hardware and various software that constitute the information processing system of FIG. 1 including the information processing apparatus 1 of FIG. 2 and the acceleration sensor 2, the temperature sensor 3, the GPS sensor 4, and the other sensors 5 of FIG. 1, various processing can be executed.

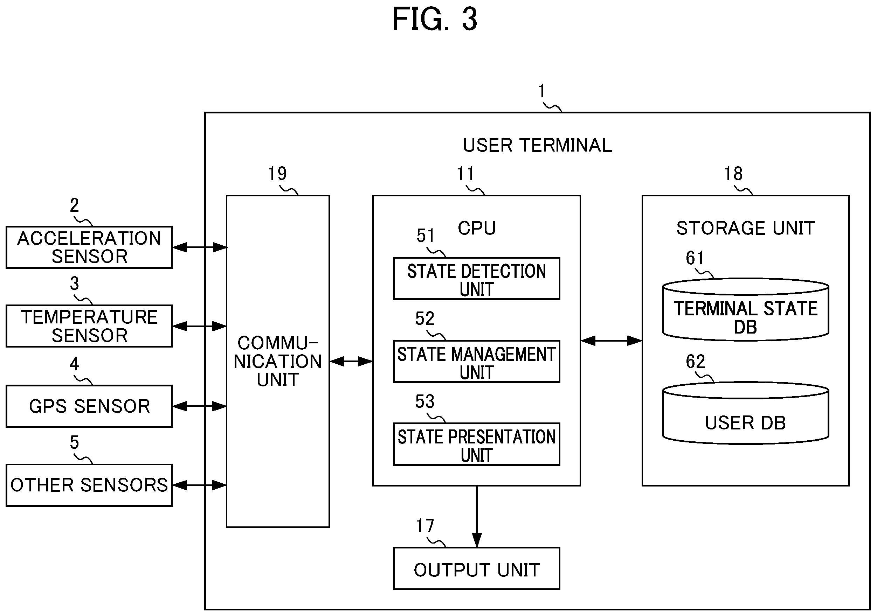

FIG. 3 is a functional block diagram illustrating an example of a functional configuration of the user terminal of FIG. 2 in the information processing system of FIG. 1.

A member mountable on the user terminal 1 carried by the user (for example, the smartphone cover 6 in the example of FIG. 1) includes the acceleration sensor 2, the temperature sensor 3, the GPS sensor 4, and the other sensors 5, each operating by vibration power generation, disposed therein. When such a member is mounted on the user terminal 1, a state detection unit 51, a state management unit 52, and a state presentation unit 53 function in the CPU 11 of the user terminal 1. A terminal state DB 61 and a user DB 62 are provided in one area of the storage unit 18.

The user terminal 1 has installed thereon a dedicated app that causes the user terminal 1 to function as the state detection unit 51, the state management unit 52, and the state presentation unit 53.

The state detection unit 51 receives, by a predetermined wireless scheme (Bluetooth (registered trademark) in the present embodiment), detection results of the acceleration sensor 2, the temperature sensor 3, the GPS sensor 4, and the other sensors 5 in a state in which the member (the smartphone cover 6 in the example of FIG. 1) is mounted, and detects various states of the user terminal 1 based on the detection results.

For example, the state detection unit 51 receives, by a predetermined wireless scheme (Bluetooth (registered trademark) in the present embodiment), a detection result of the acceleration sensor 2 in a state in which the member (the smartphone cover 6 in the example of FIG. 1) is mounted, and detects a fall of the user terminal 1 based on the detection result. Also, for example, the state detection unit 51 receives, by a predetermined wireless scheme (Bluetooth (registered trademark) in the present embodiment), a detection result of the temperature sensor 3 in a state in which the member (the smartphone cover 6 in the example of FIG. 1) is mounted, and detects an abnormal temperature condition of the user terminal 1 (such as so-called smartphone heatstroke or smartphone hypothermia) based on the detection result. Also, for example, the state detection unit 51 receives, by a predetermined wireless scheme (Bluetooth (registered trademark) in the present embodiment), a detection result of the GPS sensor 4 in a state in which the member (the smartphone cover 6 in the example of FIG. 1) is mounted, and detects a lost state of the user terminal 1 based on the detection result. Also, for example, the state detection unit 51 receives, by a predetermined wireless scheme (Bluetooth (registered trademark) in the present embodiment), a detection result of the other sensors 5 in a state in which the member (the smartphone cover 6 in the example of FIG. 1) is mounted, and detects a predetermined state of the user terminal 1 based on the detection result.

The state management unit 52 manages various states of the user terminal 1, including a fall, abnormal temperature conditions (such as so-called smartphone heatstroke or smartphone hypothermia), a lost state, and the like detected by the state detection unit 51, by storing the various states of the user terminal 1 in the terminal state DB 61. The state presentation unit 53 presents to the user various states of the user terminal 1, including a fall, abnormal temperature conditions of the user terminal 1 (such as so-called smartphone heatstroke or smartphone hypothermia), a lost state, and the like detected by the state detection unit 51, by outputting the various states from the output unit 17. Among the contents presented to the user, information relating to the user is stored in the user DB 62.

The user terminal 1 has installed thereon a dedicated app that causes the user terminal 1 to function as the state detection unit 51, the state management unit 52, and the state presentation unit 53.

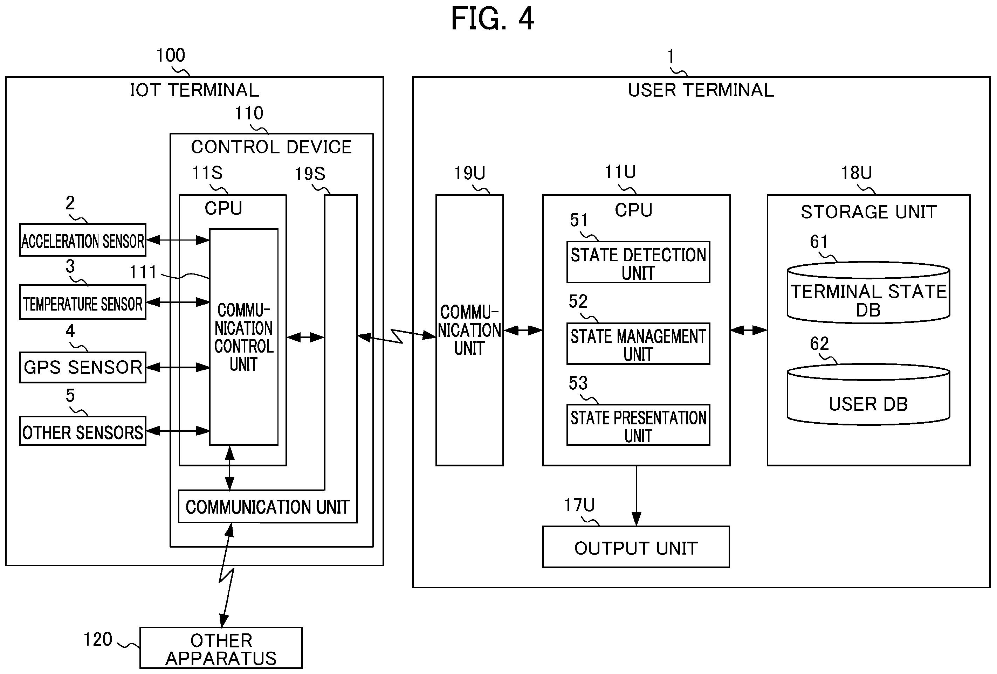

Next, a second embodiment of the information processing system according to the present invention will be described with reference to FIG. 4. FIG. 4 is a diagram illustrating the second embodiment of a functional configuration of the information processing system of the present invention. In describing the second embodiment, the same reference numerals are assigned to the same components as those in FIG. 3, and descriptions thereof are omitted. In the above embodiment, an example of the smartphone cover 6 has been described as an example of a member (apparatus) that detects the state of the terminal based on information acquired from the user terminal 1, and presents the detected state to the user; however, the second embodiment includes an IOT terminal 100 (dedicated terminal) and one other apparatus 120, as illustrated in FIG. 4.

The IOT terminal 100 includes the plurality of sensors illustrated in FIG. 1 (the acceleration sensor 2, the temperature sensor 3, the GPS sensor 4, the other sensors 5, and the like), and is used in proximity to the user terminal 1. If the sensors are capable of wireless detection, the IOT terminal 100 may be placed at a distance from the user terminal 1. The other sensors 5 include, for example, a sensor configured to detect the charge amount of the user terminal 1 and a sensor configured to detect the moisture content of the user terminal 1 through communication with the user terminal 1. That is, the IOT terminal 100 is a dedicated terminal detachably attached to the user terminal 1 on which the acceleration sensor 2, the temperature sensor 3, the GPS sensor 4, the other sensors 5, and the like are disposed.

The IOT terminal 100 includes a control device 110. The acceleration sensor 2, the temperature sensor 3, the GPS sensor 4, the other sensors 5, and the like are connected to the control device 110. The control device 110 includes hardware similar to that of the user terminal 1 illustrated in FIG. 2. In order to distinguish the hardware configuration of the control device 110 from the hardware configuration of the user terminal 1, the hardware configuration of the control device 110 is hereinafter referred to using designations such as a CPU 11S and a communication unit 19S, and the hardware configuration of the user terminal 1 is designated by appending "U" after each reference numeral, specifically a CPU 11U, a communication unit 19U, a storage unit 18U, and the like.

The CPU 11S of the control device 110 functions as a communication control unit 111 when executing processing on the IOT terminal 100. The communication control unit 111 executes control to transmit, to the other apparatus 120 via, for example, Bluetooth or the like (a predetermined wireless scheme), detection results detected by each of the plurality of sensors 2 through 5 via Bluetooth communication with the user terminal 1. The other apparatus 120 is an information processing apparatus such as a server prepared by a predetermined service provider. The server has a hardware configuration similar to that of the user terminal 1 of FIG. 2. The wireless scheme for communication with the other apparatus 120 may be, in addition to Bluetooth, data communication utilizing, for example, a wireless LAN or a mobile phone network (for example, 4G or 5G communication), and any predetermined wireless scheme is sufficient. That is, the communication control unit 111 executes control to transmit detection results of each of the plurality of sensors (for example, the acceleration sensor 2, the temperature sensor 3, the GPS sensor 4, the other sensors 5, and the like) to the other apparatus 120, which is different from the user terminal 1, by a predetermined wireless scheme or another scheme.

The communication control unit 111 acquires the current remaining charge amount through periodic communication with the user terminal 1 (for example, wireless communication at intervals of five minutes or ten minutes), acquires the current state of the user terminal 1 from the detection results of the various sensors, and transmits the current state to the other apparatus 120. The remaining charge amount may be acquired through wireless communication, or may be acquired by a detection function pre-installed in the user terminal 1 and transmitted to the other apparatus 120.

In the other apparatus 120, for example, the detection result of the acceleration sensor 2 is acquired as XX m/s^2, the detection result of the temperature sensor 3 is acquired as YY degrees, the detection result of the GPS sensor 4 is acquired as the current position (latitude and longitude) of the user terminal 1, and if the detection result of the other sensors 5 is, for example, the remaining charge amount, the remaining charge amount of ZZ% or the like is acquired. If the detection result of the other sensors 5 is, for example, moisture content (water vapor content), the water vapor content of WW g or the like is acquired. The remaining charge amount and moisture content (water vapor content) may be acquired from the user terminal 1 through communication with the user terminal 1, rather than from the other sensors 5.

The other apparatus 120 notifies the state of the user terminal 1 (for example, by outputting an alert including a recommendation) based on the detection results of the sensors received through the IOT terminal 100. The notification destination may be the user terminal 1, a terminal of a service provider that provides the IOT terminal 100, or another destination. Specifically, the other apparatus 120 compares a pre-set threshold value or range value against a detected value, and outputs an alert if the detected value deviates from the threshold value or falls outside the range value. If the temperature value of the detection result of the temperature sensor 3 reaches a range value, for example, 0 degrees or below or 35 degrees or above, an abnormal alert is output to the user terminal 1. If the water vapor content of the detection result of the moisture sensor exceeds the threshold value, an abnormal alert is output to the user terminal 1. If the acceleration of the detection result of the acceleration sensor 2 exceeds the threshold value, an abnormal alert is output to the user terminal 1. If the acceleration of the current detection result exceeds the threshold value by a value even greater than the acceleration of the previous detection result, a malfunction is suspected, and an alert including a suggestion (recommendation) for replacement is output to the user terminal 1. Rather than pre-determining threshold values for the detection results of each sensor, alerts may be issued based on comparison with maintenance standards in coordination with such maintenance standards. The detection result of the GPS sensor 4 (position information of the user terminal 1) is retrievable when the user issues a read instruction to the other apparatus 120 from a predetermined terminal upon losing the user terminal 1, and the position information of the user terminal 1 is used when searching for the user terminal 1. Furthermore, in the above-described embodiment, alerts are output based on the detection results of the respective sensors; however, the state of the user terminal 1 may be determined by combining the detection results of the respective sensors, and an alert may be output based on the determination result.

Although one embodiment of the present invention has been described above, the present invention is not limited to the above-described embodiment, and modifications, improvements, and the like within a scope that can achieve the object of the present invention are considered to be included in the present invention.

For example, although the acceleration sensor 2 configured to detect a fall of the user terminal 1 is mounted on the smartphone cover 6 in the example of FIG. 1, the present invention is not particularly limited thereto, and it is sufficient that the acceleration sensor 2 is disposed in any member mountable on the user terminal 1 carried by the user (for example, the smartphone cover 6 in the example of FIG. 1, or the IOT terminal 100 in the example of FIG. 4), and the acceleration sensor 2 may, for example, be embedded in a sticker as described above. Also, for example, although Bluetooth (registered trademark) is adopted as the communication scheme between the acceleration sensor 2, the temperature sensor 3, the GPS sensor 4, the other sensors 5, and the user terminal 1 in the above-described embodiment, the present invention is not particularly limited thereto, and any wireless communication scheme may be adopted. Although the GPS sensor 4 is adopted as the sensor for detecting the position of the user terminal 1 in the above-described embodiment, the present invention is not particularly limited thereto, and any sensor capable of directly or indirectly detecting the position of the user terminal 1 is sufficient.

The external configuration illustrated in FIG. 1 and the hardware configuration illustrated in FIG. 2 are merely illustrative for the purpose of achieving the object of the present invention, and are not particularly limited.

The functional block diagram illustrated in FIG. 3 is merely illustrative and is not particularly limited. That is, it is sufficient that the information processing system of FIG. 1 is provided with a function capable of executing all of the various processing described above as a whole, and which functional blocks and databases should be used to realize the function are not particularly limited to the example of FIG. 3.

The locations of the functional blocks and databases are also not limited to those of FIG. 3, and may be determined arbitrarily. For example, at least a portion of the functional blocks and databases disposed on the user terminal 1 side may be configured to be included in another information processing apparatus.

The series of processing described above may be executed by hardware or by software. A single functional block may be constituted by hardware alone, by software alone, or by a combination thereof.

When the series of processing is executed by software, a program constituting the software is installed into a computer or the like from a network or a recording medium. The computer may be a computer incorporated in dedicated hardware. The computer may be a computer capable of executing various functions by installing various programs, such as a server, a general-purpose smartphone, or a personal computer.

A recording medium including such a program is constituted not only by a removable medium (not illustrated) that is distributed separately from the apparatus main body in order to provide the program to the user, but also by a recording medium or the like that is provided to the user in a state of being pre-incorporated in the apparatus main body.

In the present specification, steps describing a program recorded on a recording medium include not only processing executed in chronological order in accordance with the described sequence, but also processing executed in parallel or individually even if not necessarily executed in chronological order.

To summarize the foregoing, it is sufficient for an information processing system, to which the present invention is applied, to have the following configuration, and the information processing system may take various forms of embodiment. That is, it is sufficient for an information processing system, to which the present invention is applied (for example, the information processing system of FIG. 1), to include:
a mobile terminal carried by a user (for example, the user terminal 1 of FIGS. 1 through 4); and
a sensor configured to detect a predetermined physical quantity (for example, the acceleration sensor 2, the temperature sensor 3, the GPS sensor 4, and the other sensors 5 of FIGS. 1, 3, and 4), the sensor being disposed in a member mountable on the mobile terminal (for example, the smartphone cover 6 of FIG. 1 or a sticker not illustrated),
the information processing system further including:
   a fall detection unit (for example, the state detection unit 51 of FIGS. 3 and 4) configured to receive a detection result of the sensor by a predetermined wireless scheme (for example, Bluetooth (registered trademark)) in a state in which the member is mounted, and to detect a state of the mobile terminal based on the detection result;
   a state management unit (for example, the state management unit 52 of FIGS. 3 and 4) configured to manage a state of the mobile terminal, including the detection result of the fall detection unit; and
   a state presentation unit (for example, the state presentation unit 53 of FIGS. 3 and 4) configured to present a state of the mobile terminal, including the detection result of the fall detection unit, to the user.

This makes it possible to realize a simple technique for state detection such as fall detection of a mobile terminal.

The sensor may be an acceleration sensor operating by vibration power generation (for example, the acceleration sensor 3 of FIGS. 1 and 4), and the state detection unit (for example, the state detection unit 51 of FIGS. 3 and 4) can detect, as the detection result, a fall of the mobile terminal (for example, the user terminal 1 of FIGS. 1 through 4).

The sensor may be a temperature sensor (for example, the temperature sensor 3 of FIGS. 1 and 4), and the state detection unit (for example, the state detection unit 51 of FIGS. 3 and 4) can detect, as the detection result, an abnormal temperature condition of the mobile terminal (for example, the user terminal 1 of FIGS. 1 through 4).

The sensor may be a position detection sensor (for example, the GPS sensor 4 of FIGS. 1 and 4), and the state detection unit (for example, the state detection unit 51 of FIGS. 3 and 4) can detect, as the detection result, a lost state of the mobile terminal (for example, the user terminal 1 of FIGS. 1 through 4).

Application software (for example, the dedicated app described above) configured to cause the mobile terminal (for example, the user terminal 1 of FIGS. 1 through 4) to function as the state detection unit, the state management unit, and the state presentation unit can be installed on the mobile terminal (for example, the user terminal 1 of FIGS. 1 through 4).

The information processing system can further include a dedicated terminal (for example, the IOT terminal 100 of FIG. 4) that is detachably attached to the mobile terminal (for example, the user terminal 1 of FIG. 4) and on which the plurality of sensors are disposed. The dedicated terminal (for example, the IOT terminal 100 of FIG. 4) can include a communication control unit (for example, the communication control unit 111 of FIG. 4) configured to execute control to transmit detection results of each of the plurality of sensors (for example, the acceleration sensor 2, the temperature sensor 3, the GPS sensor 4, and the other sensors 5 of FIGS. 1, 3, and 4) to the mobile terminal (for example, the user terminal 1 of FIG. 4) by the predetermined wireless scheme (for example, Bluetooth (registered trademark)).

The communication control unit (for example, the communication control unit 111 of FIG. 4) of the dedicated terminal (for example, the IOT terminal 100 of FIG. 4) further executes control to transmit detection results of each of the plurality of sensors (for example, the acceleration sensor 2, the temperature sensor 3, the GPS sensor 4, and the other sensors 5 of FIG. 4) to another apparatus (for example, the another apparatus 120 of FIG. 4) different from the mobile terminal (for example, the user terminal 1 of FIG. 4) by the predetermined wireless scheme (for example, Bluetooth (registered trademark)) or another scheme (for example, wireless LAN (registered trademark)). This enables another apparatus (for example, the other apparatus 120 of FIG. 4) different from the mobile terminal (for example, the user terminal 1 of FIG. 4) to check the state of the mobile terminal (for example, the user terminal 1 of FIG. 4) and to take action with respect to the mobile terminal (for example, the user terminal 1 of FIG. 4), such as outputting an alert including a recommendation such as a proposal for replacement, or detecting the position of the mobile terminal.

### EXPLANATION OF REFERENCE NUMERALS

1: user terminal
2: acceleration sensor
3: temperature sensor
4: GPS sensor
5: other sensors
6: smartphone cover
11: CPU
12: ROM
13: RAM
14: bus
15: input/output interface
16: input unit
17: output unit
18: storage unit
19: communication unit
20: drive
30: removable medium
51: state detection unit
52: state management unit
53: state presentation unit
100: IOT terminal
110: control device
111: communication control unit
120: other apparatus

## Claims

1. An information processing system, comprising:
a mobile terminal carried by a user; and
a sensor configured to detect a predetermined physical quantity, the sensor being disposed in a member mountable on the mobile terminal,
the information processing system further comprising:
a state detection unit configured to receive a detection result of the sensor by a predetermined wireless scheme in a state in which the member is mounted, and to detect a state of the mobile terminal based on the detection result;
a state management unit configured to manage a state of the mobile terminal, including the detection result of the state detection unit; and
a state presentation unit configured to present a state of the mobile terminal, including the detection result of the state detection unit, to the user.

2. The information processing system according to claim 1, wherein the sensor is an acceleration sensor operating by vibration power generation, and the state detection unit is configured to detect, as the detection result, a fall of the mobile terminal.

3. The information processing system according to claim 1, wherein the sensor is a temperature sensor, and the state detection unit is configured to detect, as the detection result, an abnormal temperature condition of the mobile terminal.

4. The information processing system according to claim 1, wherein the sensor is a position detection sensor, and the state detection unit is configured to detect, as the detection result, a lost state of the mobile terminal.

5. The information processing system according to claim 1, wherein application software configured to cause the mobile terminal to function as the state detection unit, the state management unit, and the state presentation unit is installed on the mobile terminal.

6. The information processing system according to claim 1, further comprising:
a dedicated terminal that is detachably attached to the mobile terminal and on which a plurality of the sensors is disposed,
wherein the dedicated terminal includes a communication control unit configured to execute control to transmit detection results of each of the plurality of the sensors to the mobile terminal by the predetermined wireless scheme.

7. The information processing system according to claim 6, wherein the communication control unit of the dedicated terminal further executes control to transmit detection results of each of the plurality of the sensors to another apparatus different from the mobile terminal by the predetermined wireless scheme or another scheme.

8. An information processing method executed by a mobile terminal in an information processing system including:
a mobile terminal carried by a user; and
a sensor configured to detect a predetermined physical quantity, the sensor being disposed in a member mountable on the mobile terminal,
the information processing method comprising:
a fall detection step of receiving a detection result of the sensor by a predetermined wireless scheme in a state in which the member is mounted, and detecting a state of the mobile terminal based on the detection result;
a state management step of managing a state of the mobile terminal, including the detection result obtained by the processing of the fall detection step; and
a state presentation step of presenting a state of the mobile terminal, including the detection result obtained by the processing of the fall detection step, to the user.

9. A program causing a computer configured to control a mobile terminal in an information processing system including:
a mobile terminal carried by a user; and
a sensor configured to detect a predetermined physical quantity, the sensor being disposed in a member mountable on the mobile terminal,
to execute control processing comprising:
a fall detection step of receiving a detection result of the sensor by a predetermined wireless scheme in a state in which the member is mounted, and detecting a state of the mobile terminal based on the detection result;
a state management step of managing a state of the mobile terminal, including the detection result obtained by the processing of the fall detection step; and
a state presentation step of presenting a state of the mobile terminal, including the detection result obtained by the processing of the fall detection step, to the user.

## Amended claims

### Amended claims under Art. 19.1 PCT

1. An information processing system, comprising:
a mobile terminal (1) carried by a user; and
a sensor configured to detect a predetermined physical quantity, the sensor being disposed in a member mountable on the mobile terminal (1),
the information processing system further comprising:
a state detection unit (51) configured to receive a detection result of the sensor by a predetermined wireless scheme in a state in which the member is mounted, and to detect a state of the mobile terminal (1) based on the detection result;
a state management unit (52) configured to manage a state of the mobile terminal (1), including the detection result of the state detection unit (51); and
a state presentation unit (53) configured to present a state of the mobile terminal (1), including the detection result of the state detection unit (51), to the user.

2. The information processing system according to claim 1, wherein the sensor is an acceleration sensor (2) operating by vibration power generation, and the state detection unit (51) is configured to detect, as the detection result, a fall of the mobile terminal (1).

3. The information processing system according to claim 1, wherein the sensor is a temperature sensor (3), and the state detection unit (51) is configured to detect, as the detection result, an abnormal temperature condition of the mobile terminal (1).

4. The information processing system according to claim 1, wherein the sensor is a position detection sensor (4), and the state detection unit (51) is configured to detect, as the detection result, a lost state of the mobile terminal (1).

5. The information processing system according to claim 1, wherein application software configured to cause the mobile terminal (1) to function as the state detection unit (51), the state management unit (52), and the state presentation unit (53) is installed on the mobile terminal (1).

6. The information processing system according to claim 1, further comprising:
a dedicated terminal (100) that is detachably attached to the mobile terminal and on which a plurality of the sensors (2, 3, 4, 5) is disposed,
wherein the dedicated terminal (100) includes a communication control unit (111) configured to execute control to transmit detection results of each of the plurality of the sensors (2, 3, 4, 5) to the mobile terminal (1) by the predetermined wireless scheme.

7. The information processing system according to claim 6, wherein the communication control unit (111) of the dedicated terminal (100) further executes control to transmit detection results of each of the plurality of the sensors (2, 3, 4, 5) to another apparatus (120) different from the mobile terminal (1) by the predetermined wireless scheme or another scheme.

8. An information processing method executed by a mobile terminal (1) in an information processing system including:
a mobile terminal (1) carried by a user; and
a sensor configured to detect a predetermined physical quantity, the sensor being disposed in a member mountable on the mobile terminal (1),
the information processing method comprising:
a fall detection step of receiving a detection result of the sensor by a predetermined wireless scheme in a state in which the member is mounted, and detecting a state of the mobile terminal (1) based on the detection result;
a state management step of managing a state of the mobile terminal (1), including the detection result obtained by the processing of the fall detection step; and
a state presentation step of presenting a state of the mobile terminal (1), including the detection result obtained by the processing of the fall detection step, to the user.

9. A program causing a computer configured to control a mobile terminal (1) in an information processing system including:
a mobile terminal (1) carried by a user; and
a sensor (2) configured to detect a predetermined physical quantity, the sensor being disposed in a member mountable on the mobile terminal (1),
to execute control processing comprising:
a fall detection step of receiving a detection result of the sensor by a predetermined wireless scheme in a state in which the member is mounted, and detecting a state of the mobile terminal (1) based on the detection result;
a state management step of managing a state of the mobile terminal (1), including the detection result obtained by the processing of the fall detection step; and
a state presentation step of presenting a state of the mobile terminal (1), including the detection result obtained by the processing of the fall detection step, to the user.
